(19) Europäisches Patentamt
European Patent Office
Office européen des brevets

(11) **EP 2 241 918 A1**

(12) **EUROPEAN PATENT APPLICATION**
published in accordance with Art. 153(4) EPC

(43) Date of publication:
**20.10.2010 Bulletin 2010/42**

(51) Int Cl.:
*G02B 13/00* (2006.01)    *G02B 7/28* (2006.01)
*G02B 13/18* (2006.01)    *G02B 26/00* (2006.01)
*G03B 3/00* (2006.01)    *H04N 5/225* (2006.01)
*H04N 5/232* (2006.01)

(21) Application number: **09709257.1**

(22) Date of filing: **20.01.2009**

(86) International application number:
**PCT/JP2009/050714**

(87) International publication number:
**WO 2009/098932 (13.08.2009 Gazette 2009/33)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **04.02.2008 JP 2008024217**

(71) Applicant: **Sony Corporation
Tokyo 108-0075 (JP)**

(72) Inventor: **OKAMOTO, Yoshiki
Tokyo 108-0075 (JP)**

(74) Representative: **Thévenet, Jean-Bruno et al
Cabinet Beau de Loménie
158, rue de l'Université
75340 Paris Cédex 07 (FR)**

(54) **IMAGE PICKING-UP LENS SYSTEM AND IMAGE PICKING-UP DEVICE USING THE SAME**

(57) It is an object of the present invention to provide an imaging lens system having an autofocus function using a liquid lens and an imaging apparatus using the imaging lens system in which the imaging lens system is configured with a smaller number of lenses to facilitate downsizing.

The imaging lens system includes a first lens group 1 and a second lens group 2 in this order from the object side. The second lens group 2 includes a liquid lens system in which the curvature radius of the interface between a conductive liquid 22 and an insulating liquid 23 changes depending on an applied voltage. The curvature center of the interface between the conductive liquid 22 and the insulating liquid 23 of the liquid lens system is shifted toward the conductive liquid 22.

[FIG.1]

**Description**

Technical Field

The present invention relates to an imaging lens system having an autofocus function and an imaging apparatus using the imaging lens system.

Background Art

As an electrowetting device using electrowetting, variable-focus lens devices using a liquid lens have been introduced by Varioptic (France) and Philips (Netherlands) (for example, see Non-patent Document 1).
Also, imaging lens systems having an autofocus function by similarly using a liquid lens have been proposed (for example, see Patent Documents 1 and 2).
The imaging lens system proposed in Patent Document 1 includes four lens groups, in which a first lens group on the object side includes a liquid lens.
On the other hand, the imaging lens system proposed in Patent Document 2 includes three lens groups, in which a first lens group also includes a liquid lens.
Non-patent Document 1: S. Kuiper et al., "Variable-focus liquid lens for miniature cameras", Applied Physics Letters, Vol.85, No.7, 16 August 2004, pp.1128-1130
Patent Document 1: JP-A-2005-84387
Patent Document 2: JP-A-2006-72295

Disclosure of the Invention

Problems to be Solved by the Invention

However, the imaging lens systems proposed in Patent Documents 1 and 2 include three or more lens groups, thereby inducing a large total number of lenses, which is a disadvantage in downsizing an imaging lens system and an imaging apparatus the imaging lens system. Especially for providing an imaging apparatus to compact portable equipment such as a mobile phone, further reducing the number of lenses is necessary in order to develop an imaging lens system having a liquid lens for practical use.
In view of the above problem, it is an object of the present invention to provide an imaging lens system having an autofocus function using a liquid lens and an imaging apparatus using the imaging lens system, in which the imaging lens system is configured with a smaller number of lenses to facilitate downsizing.

Means for Solving the Problems

In order to solve the above problem, an imaging lens system in accordance with the invention includes a first lens group and a second lens group in this order from the object side. The second lens group includes a liquid lens system in which the curvature radius of the interface between a conductive liquid and an insulating liquid changes depending on an applied voltage. The curvature center of the interface between the conductive liquid and the insulating liquid of the liquid lens system is shifted toward the conductive liquid.
In the imaging lens system in accordance with the invention, the liquid lens system desirably includes a light-transmissive substrate, the conductive liquid, the insulating liquid and a light-transmissive substrate disposed in this order from the object side.
An imaging apparatus in accordance with the invention includes the above-described imaging lens system. Accordingly, the imaging apparatus includes an imaging lens system, a stop and an imaging unit. The imaging lens system includes a first lens group and a second lens group in this order from the object side. The second lens group includes a liquid lens system in which the curvature radius of the interface between a conductive liquid and an insulating liquid changes depending on an applied voltage. The curvature center of the interface between the conductive liquid and the insulating liquid of the liquid lens system is shifted toward the conductive liquid.
As described above, an imaging lens system and an imaging apparatus using the imaging lens system in accordance with the invention includes a first lens group and a second lens group in this order from the object side. The second lens group includes a liquid lens system in which the curvature radius of the interface between a conductive liquid and an insulating liquid changes depending on an applied voltage. This configuration using the two lens groups can reduce the total number of lenses with respect to an imaging lens system using a conventional liquid lens, facilitating downsizing.

Also, the curvature center of the interface between the conductive liquid and the insulating liquid of the liquid lens system is shifted toward the conductive liquid, which can reduce the undercorrection of the chromatic aberration. Further, in the imaging lens system in accordance with the invention, configuring the liquid lens system such that a light-transmissive substrate, the conductive liquid, the insulating liquid and a light-transmissive substrate are disposed in this order from the object side allows the spherical aberration, the astigmatism and the distortion aberration to be reduced to a practically acceptable level, as described later. Thus, the imaging lens system and the imaging apparatus having good properties can be provided.

Advantage of the Invention

According to the invention, an imaging lens system having an autofocus function using a liquid lens can be configured with a smaller number of lenses to facilitate downsizing.

Brief Description of the Drawings

[Fig. 1] A schematic configuration diagram of an imaging apparatus including an imaging lens system in accordance with an embodiment of the invention.
[Fig. 2] A schematic configuration diagram of an imaging lens system in accordance with a first embodiment of the invention.
[Fig. 3] Figs. 3A-3C showing the spherical aberration, the astigmatism and the distortion aberration for a first through third states of the imaging lens system in accordance with the first embodiment of the invention.
[Fig. 4] A schematic configuration diagram of an imaging lens system in accordance with a second embodiment of the invention.
[Fig. 5] Figs. 5A-5C showing the spherical aberration, the astigmatism and the distortion aberration for a first through third states of the imaging lens system in accordance with the second embodiment of the invention.
[Fig. 6] A schematic configuration diagram of an imaging lens system in accordance with a third embodiment of the invention.
[Fig. 7] Figs. 7A-7C showing the spherical aberration, the astigmatism and the distortion aberration for a first through third states of the imaging lens system in accordance with the third embodiment of the invention.

Best Mode for Carrying Out the Invention

An example of the best mode for carrying out the invention is described below, and it should be understood that the invention is not limited to the example.

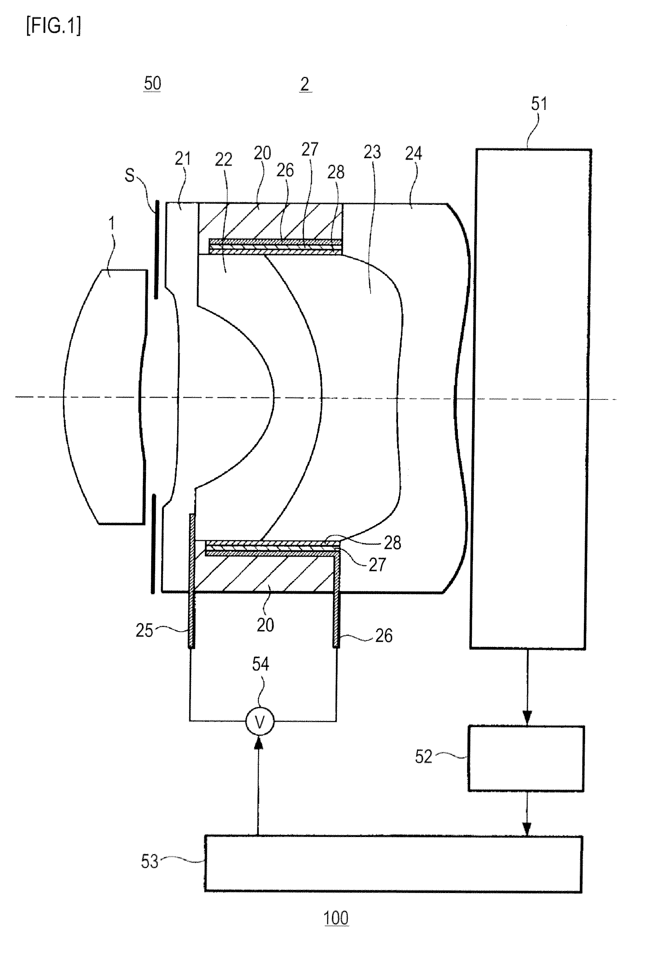

Fig. 1 shows a schematic configuration of an imaging lens system and an imaging apparatus using the imaging lens system in accordance with an embodiment of the invention. An imaging lens system 50 of an imaging apparatus 100 includes a first lens group 1 and a second lens group 2. For the second lens group 2, a variable-focus lens using a liquid lens system is used. The first lens group 1 may be configured with a single lens, for example, when both surfaces of the lens are aspheric. A stop S is disposed between the first lens group 1 and the second lens group 2, that is, on the object side with respect to the interface between a conductive liquid 22 and an insulating liquid 23 of the liquid lens system.

The liquid lens system used for the second lens group 2 of the imaging lens system 50 includes a light-transmissive substrate 21 disposed at an aperture on the object side of an enclosure 20 and a light-transmissive substrate 24 disposed at an aperture on the side opposite to the object side. The space enclosed by the enclosure 20 and the light-transmissive substrates 21, 24 is maintained liquid-tight. The shape of the enclosure 20 may be a shape rotationally symmetrical about an optical axis C, such as a cylinder or a cone with the top cut off. In the case shown in Fig. 1, the shape of the enclosure 20 is approximately a cylinder. The enclosure 20 contains the conductive liquid 22 and the insulating liquid 23 in this order from the object side. The enclosure 20 may be made of an insulating material. The light-transmissive substrates 21 and 24 may be made of a glass or a transparent resin such as plastic. On the other hand, the materials of the conductive liquid 22 and the insulating liquid 23 are light-transmissive, have different refraction indexes, and have the same density (specific gravity). The conductive liquid 22 may be made of an aqueous solution, such as salt water, that is not soluble in the insulating liquid 23. The insulating liquid 23 may be made of one or more of various oils such as silicone oil.

In the liquid lens system included in the second lens group 2 shown in Fig. 1, a first electrode 25 is formed at the aperture on the object side of the enclosure 20, in contact with the conductive liquid 22. A portion of the first electrode 25 is pulled out to be a terminal. Also, a second electrode 26 is formed cylindrically from the inner wall of the enclosure 20 to the aperture on the image side. A portion of the second electrode 26 is pulled out to be a terminal. An edge on the object side of the second electrode 26 extended on the inner wall of the enclosure 20 is formed separated from the first electrode 25 on the object side. Also, a dielectric film 27 and a water-repellent film 28 are provided on the surface of the second electrode 26 in the enclosure 20.

Also, the imaging apparatus 100 includes an imaging unit 51 disposed on the image side of the imaging lens system 50. The imaging unit 51 may be a charge-coupled device (CCD) or a complementary metal oxide semiconductor (CMOS) device or the like including: a plurality of photoelectric conversion sections for converting illuminated light energy to charge; a charge storage section for storing the charge; and a charge transfer section for transferring and sending out the charge. Further, the imaging apparatus 100 includes: a signal conversion unit 52 for converting the light signal detected by the imaging unit 51; a control unit 53 for processing signal; and a voltage application unit 54 for applying an voltage between the electrodes 25 and 26 of the second lens group 2 including the liquid lens system.

With this configuration, in the second lens group, 2, when the voltage application unit 54 applies an appropriate voltage between the electrodes 25 and 26, the curvature of the interface between the conductive liquid 22 and the insulating liquid 23 will change. This change in the curvature can cause the lens effect own incident light to change, thereby changing the focal length.

Specifically, when no voltage is applied between the first and second electrodes 25 and 26, the interface between the conductive liquid 22 and the insulating liquid 23, filling the enclosure 20, forms a portion of a sphere with a certain radius due to the balance between the surface tensions of the liquids 22 and 23 and the inner wall surface of the enclosure 20.

When the voltage application unit 54 applies a voltage between the first and second electrodes 25 and 26, the conductive liquid 22 behaves as if its "wettability" to the inner wall surface of the enclosure 20 is improved (this phenomenon is called electrowetting), decreasing the contact angle. As a result, the curvature radius of the interface between the conductive liquid 22 and the insulating liquid 23 increases, causing the spherical surface to get closer to a flat surface. Thus, the difference of refraction index and the curvature of the interface between the conductive liquid 22 and the insulating liquid 23 provide a lens effect, and the voltage application causes the curvature of the liquid interface to change due to electrowetting as above, thereby changing the focal length.

Advantageously, since the variable-focus lens using electrowetting as above essentially allows no current to flow except when discharging, it consumes very low power. Also advantageously, since this variable-focus lens has no mechanical moving part, it has a longer life than that of a conventional variable-focus lens in which a lens is moved by a motor or the like. Further, advantageously, since this variable-focus lens has no motor, it can provide an autofocus mechanism with a small footprint and simple configuration.

By the way, two liquids - insulating liquid (oil) and conductive liquid (water) - forming an liquid lens generally have the following relationship:

$$n1 > n2,$$

and

$$v1 < v2,$$

where n1 and v1 are the refraction index and Abbe's number of the insulating liquid, respectively, and n2 and v2 are the refraction index and Abbe's number of the conductive liquid, respectively. Therefore, when the interface between the two liquids is convex toward the insulating liquid with the refraction index of n1, it has a positive power and a positive chromatic aberration. When the interface is concave toward the insulating liquid, it has a negative power and a negative chromatic aberration.

Generally, since the chromatic aberration of the entire optical system of an imaging apparatus tends to be undercorrected, it may be desirable that the interface between the two liquids is concave toward the insulating liquid. Accordingly, when the second lens group 2 including the liquid lens system includes the light-transmissive substrate 21, the conductive liquid 22, the insulating liquid 23 and the light-transmissive substrate 24 disposed in this order from the object side, the curvature of the two-liquid interface is preferably concave toward the insulating liquid 23.

Thus, the imaging lens system 50 of this embodiment is configured such that the curvature center of the interface between the conductive liquid 22 and the insulating liquid 23 of the second lens group 2 is shifted toward the conductive liquid 22. This configuration causes the curvature of the interface between the two liquids to be concave toward the insulating liquid 23, which can reduce the undercorrection of the chromatic aberration of the entire imaging lens system 50.

Also, in this configuration, it is desirable that the liquid lens system of the second lens group 2 includes the conductive liquid 22 disposed on the object side and the insulating liquid 23 disposed on the image side, as shown in Fig. 1. This disposition allows the interface between the liquids 22 and 23 to be shifted toward the conductive liquid 22 when no voltage is applied.

Next, specific numerical examples of the imaging lens system in accordance with the embodiment of the invention are described below as a first through third embodiments. The following embodiments assume that both the first lens group 1 and the second lens group, 2 have a positive power (refracting power).

[1] First embodiment

First, a numerical example of a specific structure applicable as the first embodiment is described. This example is applied to the imaging lens system 50 of the imaging apparatus 100 described with reference to Fig. 1. The focal length f, the F-number Fno and the angle of view 2ω (ω is a half angle of view) of the imaging lens system 50 are as follows:

$$f = 3.7 \text{ mm,}$$

$$Fno = 2.7,$$

and

$$2\omega = 63°.$$

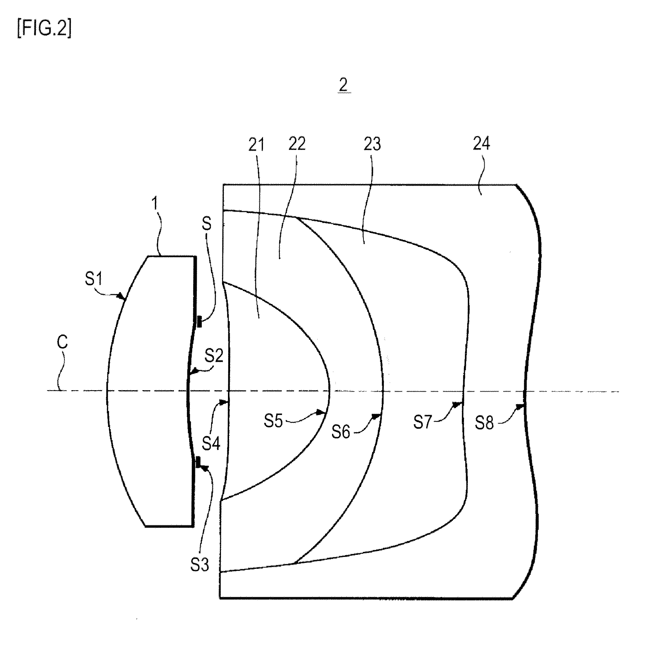

As shown in Fig. 2, the incidence and outgoing surface of the first lens group 1, the surface at which the stop S is disposed, and the incidence and outgoing surfaces of the light-transmissive substrate 21, the conductive liquid 22, the insulating liquid 23 and the light-transmissive substrate 24 of the second lens group 2 are denoted in the order from the object side as first through eighth surfaces S1 through S8. In Fig. 2, the parts described with reference to Fig. 1 are denoted by the same numerals, and will not be repeatedly described. Then, for each of the first through eighth surfaces S1 through S8, Table 1 below shows the curvature radius, the spacing along the optical axis between the surfaces (the distance to the next surface) (for the eighth surface S8, the distance to the surface of the imaging unit 51), the refraction index of d-ray of wavelength 587.56 nm for the medium between the surfaces and, similarly, the Abbe's number of d-ray, and others.

[Table 1]

| Surface number | Curvature radius r [mm] | Spacing along optical axis between surfaces d[mm] | Refraction index between surfaces n [d-ray] | Abbe's number ν [d-ray] | Type etc. |
|---|---|---|---|---|---|
| S1 | 2.121 | 0.800 | 1.5251 | 56.0 | Aspheric |
| S2 | 3.902 | 0.100 | - | - | Aspheric |
| S3 | Infinity | 0.300 | - | - | Aperture stop |
| S4 | 40.490 | 1.000 | 1.5251 | 56.0 | Aspheric |
| S5 | -0,601 | 0.500 | 1.3430 | 47.0 | Aspheric |
| S6 | R5 | 0.800 | 1.4982 | 34.6 | |
| S7 | 0.771 | 0.600 | 1.5251 | 56.0 | Aspheric |
| S8 | 2.991 | 0.200 | - | - | Aspheric |

Table 2 below shows aspherical coefficients of the first, second, fourth, fifth, seventh and eighth surfaces S1, S2, S4, S5, S7 and S8 when Eq. 1 below is used us aspherical surface equation. In Eq. 1, Z is the distance along the optical axis from the lens surface when the light traveling direction is a positive direction, h is the height perpendicular to the optical axis, R is the curvature radius, k is a conic constant, and A and B are 4th and 6th order aspherical coefficients, respectively.

[Eq. 1]

$$Z = \frac{\dfrac{h^2}{R}}{1+\sqrt{1-(1+k)\dfrac{h^2}{R^2}}} + Ah^4 + Bh^6$$

[Table 2]

| Surface number | k | A | B |
|---|---|---|---|
| S1 | -0.180850 | $-0.112483 \times 10^{-1}$ | $-0.361451 \times 10^{-2}$ |
| S2 | 6.915218 | $-0.249712 \times 10^{-1}$ | $-0.264184 \times 10^{-1}$ |
| S4 | -781.037146 | $-0.551758 \times 10^{-1}$ | $-0.950246 \times 10^{-2}$ |
| S5 | -1.066209 | $0.355959 \times 10^{-1}$ | -0.170921 |
| 57 | -3598.011318 | 0.140625 | -0.127323 |
| S8 | -16.914861 | $-0.128842 \times 10^{-1}$ | $-0.392521 \times 10^{-2}$ |

Table 3 below shows numerical examples of R5 of Table 1 above for object distances of 600, 120 and 50 mm in the first and second lens groups 1 and 2 shown in Fig. 2.

[Table 3]

| Object distance [mm] | R5 |
|---|---|
| 600 | -1.726 |
| 120 | -2.069 |
| 50 | -3.285 |

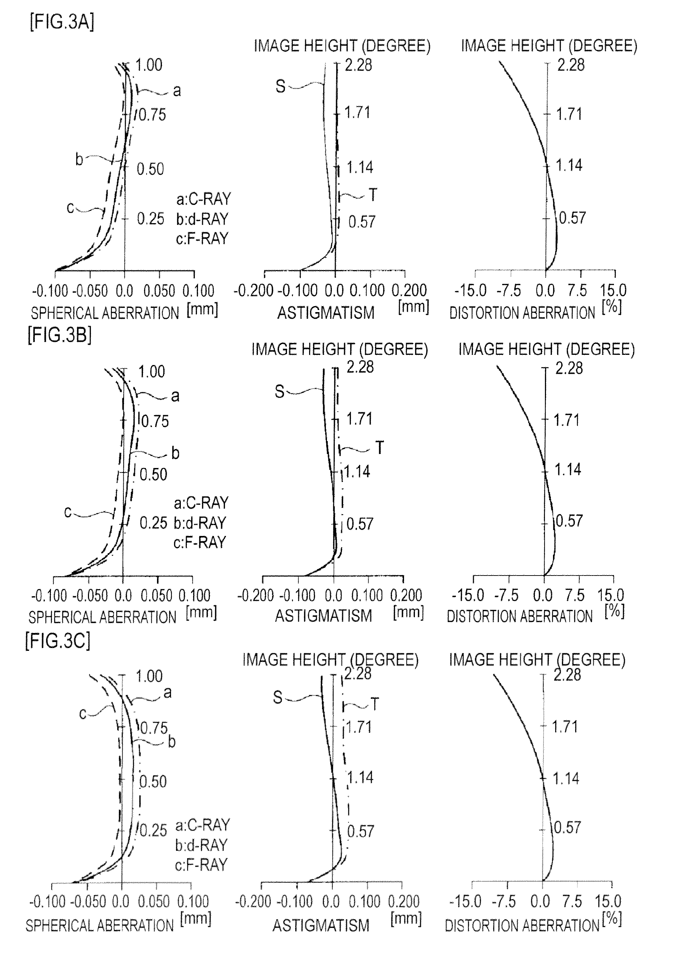

For the imaging lens system 50 configured with this numerical example, Figs. 3A, 3B and 3C show the spherical aberration, the astigmatism and the distortion aberration for object distances of 600, 120 and 50 mm, respectively. In the graphs showing the spherical aberration of Figs. 3A through 3C, the dashed-dotted line a indicates the spherical aberration of C-ray with a wavelength of 656.2700 nm, the solid line b indicates the spherical aberration of d-ray with a wavelength of 587.5600 nm, and the dashed line c indicates the spherical aberration of F-ray with a wavelength of 486.1300 nm.

In this case, as seen from Figs. 3A through 3C, the spherical aberration, the astigmatism and the distortion aberration may be reduced to a practically acceptable level for any of these object distances. Also as seen from these figures, the differences of spherical aberration between these wavelengths of light may be sufficiently small, and the chromatic aberration may be reduced.

Thus, in the first embodiment, the practical imaging lens system 50 can be configured in which the aberrations are sufficiently reduced by the two lens groups. This can facilitate the downsizing of the imaging apparatus 100 including this imaging lens system 50.

[2] Second embodiment

Next, a numerical example of a specific lens structure applicable as the second embodiment is described. This example is also applied to the imaging lens system 50 of the imaging apparatus 100 described with reference to Fig. 1. The focal length f, the F-number Fno and the angle of view 2ω (ω is a half angle of view) of the imaging lens system 50 are as follows:

$$f = 3.7 \text{ mm,}$$

$$\text{Fno} = 2.7,$$

and

$$2\omega = 63°.$$

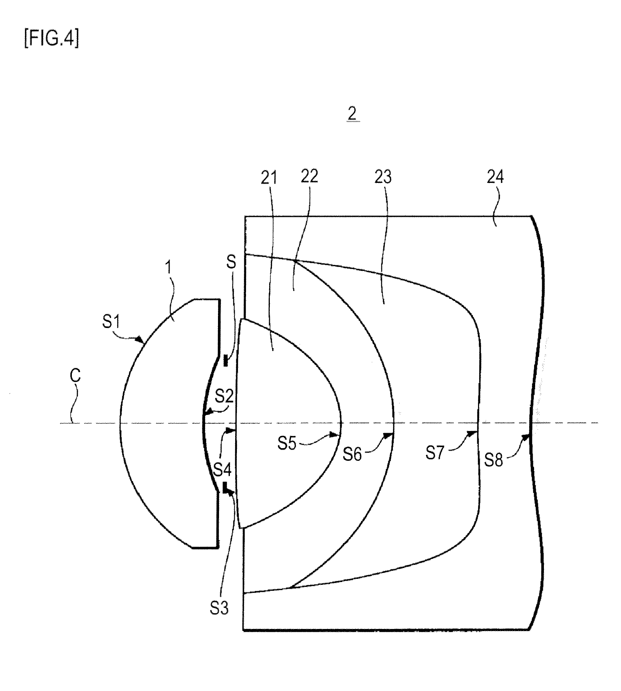

As shown in Fig. 4, the incidence and outgoing surface of the first lens group 1, the surface at which the stop S is disposed, and the incidence and outgoing surfaces of the second lens group, 2 are denoted in the order from The object side as first through eighth surfaces S1 through S8. In Fig. 4, the parts described with reference to Fig. 1 are denoted by the same numerals, and will not be repeatedly described. For each of the first through eighth surfaces S1 through S8, Table 4 below shows the curvature radius, the spacing along the optical axis between the surfaces, the refraction index of d-ray for the medium between the surfaces and, similarly, the Abbe's number of d-ray, and others.
[Table 4]

| Surface number | Curvature radius r [mm] | Spacing along optical axis between surfaces d [mm] | Refraction index between surfaces n [d-ray] | Abbe's number ν [d-ray] | Type etc. |
|---|---|---|---|---|---|
| S1 | 1.487 | 0.800 | 1.5251 | 56.0 | Aspheric |
| S2 | 2.034 | 0.200 | - | - | Aspheric |
| S3 | Infinity | 0.100 | - | - | Aperture stop |
| S4 | 18.623 | 1.000 | 1.5251 | 56.0 | Aspheric |
| S5 | -0.652 | 0.500 | 1.3430 | 47.0 | Aspheric |
| S6 | -1.468 | 0.800 | 1.4982 | 34.6 | |
| S7 | 0.673 | 0.500 | 1.5251 | 56.0 | Aspheric |
| S8 | 3.775 | 0.200 | - | - | Aspheric |

Table 5 below shows aspherical coefficients of the first, second, fourth, fifth, seventh and eighth surfaces S1, S2, S4, S5, S7 and S8 when Eq. 1 above is used as aspherical surface equation.
[Table 5]

| Surface number | k | A | B |
|---|---|---|---|
| S1 | 0.288182 | $-0.542391 \times 10^{-2}$ | $0.534802 \times 10^{-2}$ |
| S2 | 5.575642 | $0.243578 \times 10^{-2}$ | $0.550355 \times 10^{-2}$ |
| S4 | -262.904754 | $-0.226503 \times 10^{-1}$ | $0.446056 \times 10^{-1}$ |
| S5 | -1.056883 | $0.149592 \times 10^{-1}$ | -0.164245 |
| S7 | -3598.011407 | $0.931462 \times 10^{-1}$ | -0.149786 |
| S8 | -15.398666 | $-0.167286 \times 10^{-1}$ | $-0.121115 \times 10^{-2}$ |

Table 6 below shows numerical examples of R5 of Table 4 above for object distances of 600, 120 and 50 mm in the first and second lens groups 1 and 2 shown in Fig. 4.

[Table 6]

| Object distance [mm] | R5 |
|---|---|
| 600 | -1.468 |
| 120 | -1.763 |
| 50 | -2.818 |

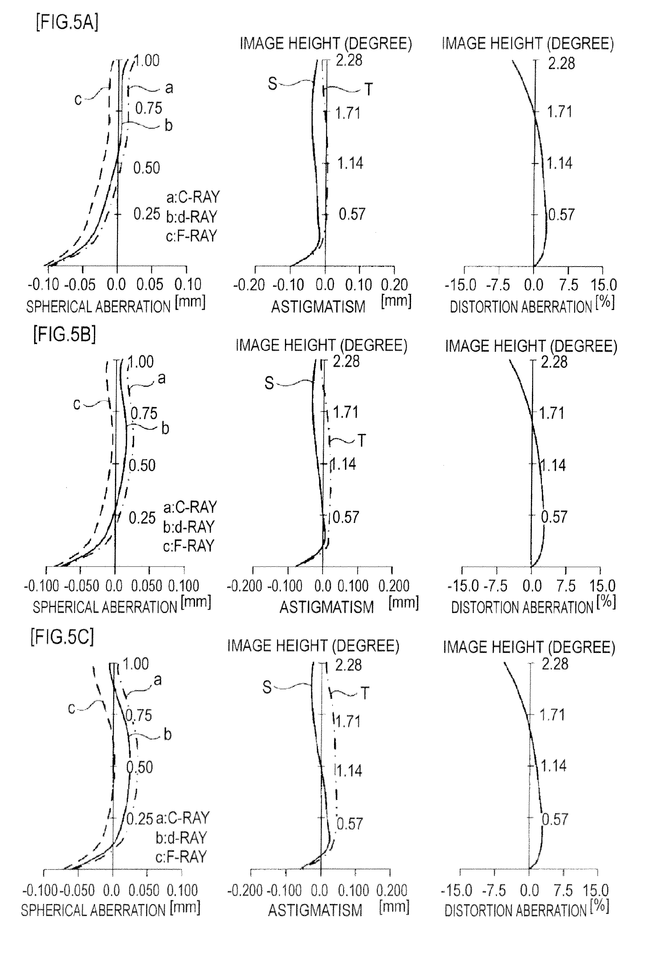

For the imaging lens system 50 configured with this numerical example, Figs. 5A, 5B and 5C show the spherical aberration, the astigmatism and the distortion aberration for object distances of 600, 120 and 50 mm, respectively. Again in this case, as seen from Figs. 5A through 5C, the spherical aberration, the astigmatism and the distortion aberration may be reduced to a practically acceptable level for any of these object distances. Also as seen from these figures, the differences of spherical aberration between these wavelengths of light may be sufficiently small, and the chromatic aberration may be sufficiently reduced.

Thus, also in the second embodiment, the practical imaging lens system 50 can be configured in which the aberrations are sufficiently reduced by the two lens groups. This can facilitate the downsizing of the imaging apparatus 100 including this imaging lens system 50.

[3] Third embodiment

Next, a numerical example of a specific lens structure applicable as the third embodiment is described. This example is also applied to the imaging lens system 50 of the imaging apparatus 100 described with reference to Fig. 1. The focal length f, the F-number Fno and the angle of view 2ω (ω is a half angle of view) of the imaging lens system 50 are as follows:

$$f = 3.7 \text{ mm},$$

$$Fno = 2.7,$$

and

$$2\omega = 63°.$$

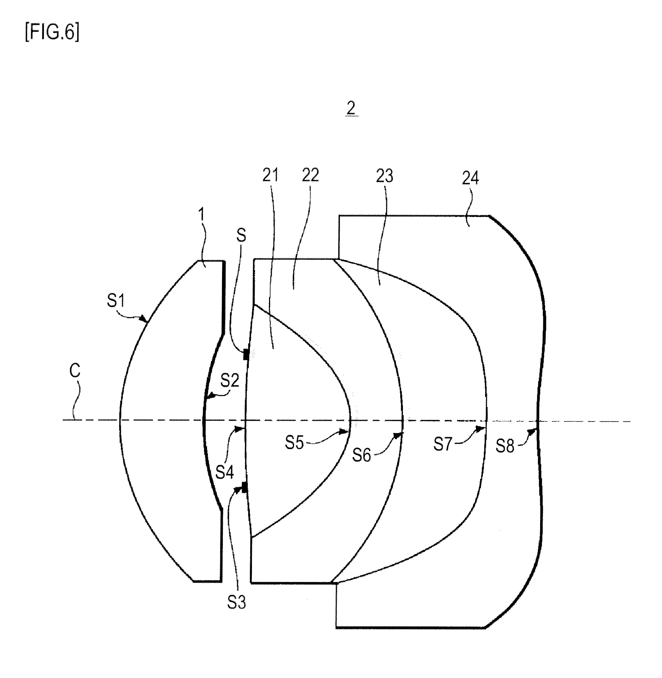

As shown in Fig. 6, the incidence and outgoing surface of the first lens group 1, the surface at which the stop S is disposed, and the incidence and outgoing surfaces of the second lens group 2 are denoted in the order from the object side as first through eighth surfaces S1 through S8. In Fig. 6, the parts described with reference to Fig. 1 are denoted by the same numerals, and will not be repeatedly described. For each of the first through eighth surfaces S1 through S8, Table 7 below shows the curvature radius, the spacing along the optical axis between the surfaces, the refraction index of d-ray for the medium between the surfaces and, similarly, the Abbe's number of d-ray, and others.

[Table 7]

| Surface number | Curvature radius r [mm] | Spacing along optical axis between surfaces d [mm] | Retraction index between surfaces n [d-ray] | Abbe's number ν [d-ray] | Type etc. |
|---|---|---|---|---|---|
| S1 | 1.856 | 0.800 | 1.5251 | 56.0 | Aspheric |

(continued)

| Surface number | Curvature radius r [mm] | Spacing along optical axis between surfaces d [mm] | Retraction index between surfaces n [d-ray] | Abbe's number ν [d-ray] | Type etc. |
|---|---|---|---|---|---|
| S2 | 2.547 | 0.400 | - | - | Aspheric |
| S3 | Infinity | 0.000 | - | - | Aperture stop |
| S4 | 7.693 | 1.000 | 1.5251 | 56.0 | Aspheric |
| S5 | -0.659 | 0.500 | 1.3430 | 47.0 | Aspheric |
| S6 | -1.773 | 0.800 | 1.4982 | 34.6 |  |
| S7 | -4.301 | 0.500 | 1.5251 | 56.0 | Aspheric |
| S8 | 4.739 | 0.100 | - | - | Aspheric |

Table 8 below shows aspherical coefficients of the first, second, fourth, fifth, seventh and eighth surfaces S1, S2, S4, S5, S7 and S8 when Eq. 1 above is used as aspherical surface equation.

[Table 8]

| Surface number | k | A | B |
|---|---|---|---|
| S1 | -0.288882 | $-0.884378 \times 10^{-2}$ | - |
| S2 | 6.368048 | $-0.462833 \times 10^{-1}$ | - |
| S4 | -161.278351 | - | - |
| S5 | -1.050802 | - | - |
| S7 | -3598.011734 | 0.221593 | - |
| S8 | -1.250619 | $-0.567104 \times 10^{-1}$ | - |

Table 9 below shows numerical examples of R5 of Table 7 above for object distances of 600, 120 and 50 mm in the first and second lens groups 1 and 2 shown in Fig. 6.

[Table 9]

| Object distance [mm] | R5 |
|---|---|
| 600 | -1.77339 |
| 120 | -2.15242 |
| 50 | -3.52567 |

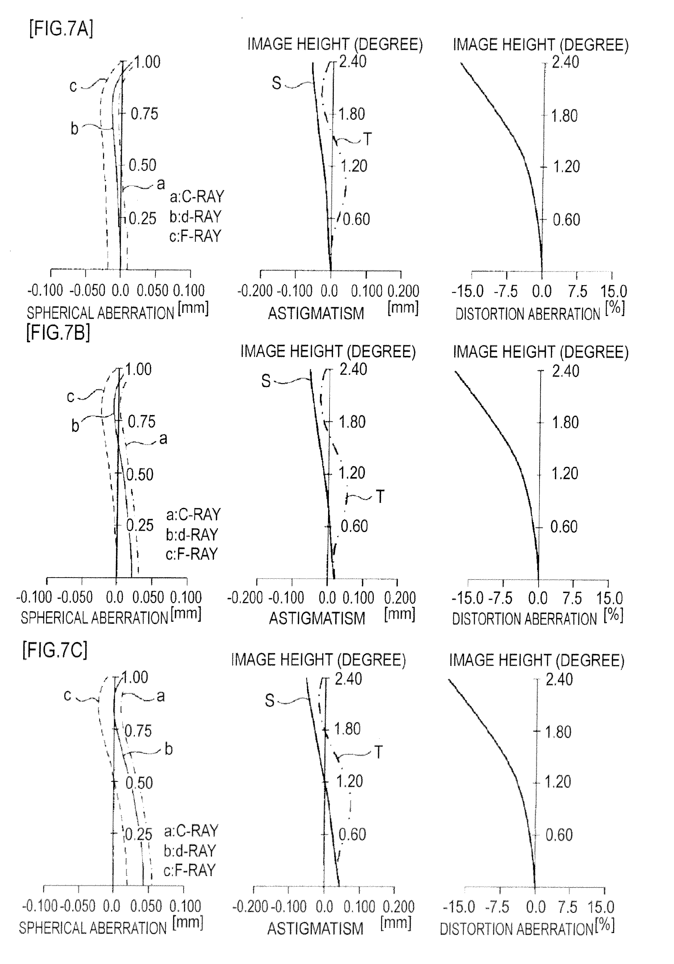

For the imaging lens system 50 configured with this numerical example, Figs. 7A, 7B and 7C show the spherical aberration, the astigmatism and the distortion aberration for object distances of 600, 120 and 50 mm, respectively. Again in this case, as seen from Figs. 7A through 7C, the spherical aberration, the astigmatism and the distortion aberration may be reduced to a practically acceptable level for any of these object distances. Also as seen from these figures, the differences of spherical aberration between these wavelengths of light may be sufficiently small, and the chromatic aberration may be reduced.

Thus, also in the third embodiment, the practical imaging lens system 50 can be configured in which the aberrations are sufficiently reduced by the two lens groups. This can facilitate the downsizing of the imaging apparatus 100 including this imaging lens system 50.

As described above, according to the invention, by using only two lens groups, an imaging lens system having an autofocus function a liquid lens and an imaging apparatus using the imaging lens system can be provided.

According to the invention, the curvature center of the interface between a conductive liquid and an insulating liquid in the liquid lens included in a second lens group on the image side is configured to be shifted toward the conductive liquid. This configuration causes the curvature of the interface between the two liquids to be concave toward the insulating liquid, which can reduce the undercorrection of the chromatic aberration of the entire imaging system.

Further, configuring the liquid lens system such that a light-transmissive substrate, the conductive liquid, the insulating liquid and a light-transmissive substrate are disposed in this order from the object side allows various aberrations to be reduced to a practically acceptable level, as described with respect to the above first through third embodiments.

Also, disposing a stop on the object side with respect to the position of the interface between the conductive liquid and the insulating liquid of the liquid lens system similarly allows the various aberrations to be sufficiently reduced.

It should be understood that the invention is not intended to be limited to the above-described embodiments, but various variation and modification can be made without departing from the scope and spirit of the invention.

Description of Reference Numerals and Signs

1. first lens group, 2. second lens group, 20. inclosure, 21. light-transmissive substrate, 22. conductive liquid, 23. insulating liquid, 24. light-transmissive substrate, 25. first electrode, 26. second electrode, 27. dielectric film, 28. water-repellent film, 50. imaging lens system, 51. imaging unit, 52. signal conversion unit, 53. control unit, 54. voltage application unit, 100. imaging apparatus

## Claims

1. An imaging lens system comprising a first group and a second lens group in this order from the object side, wherein the second lens group includes a liquid lens system in which the curvature radius of the interface between a conductive liquid and an insulating liquid changes depending on an applied voltage, and wherein the curvature center of the interface between the conductive liquid and the insulating liquid of the liquid lens system is shifted toward the conductive liquid.

2. The imaging lens system according to claim 1, wherein the liquid lens system includes a light-transmissive substrate, the conductive liquid, the insulating liquid and a light-transmissive substrate disposed in this order from the object side.

3. The imaging lens system according to claim 1, wherein a stop is disposed on the object side with respect to the position of the interface between the conductive liquid and the insulating liquid of the liquid lens system.

4. An imaging apparatus comprising an imaging lens system, a stop and an imaging unit, wherein the imaging lens system includes a first lens group and a second lens group in this order from the object side, wherein the second lens group includes a liquid lens system in which the curvature radius of the interface between a conductive liquid and an insulating liquid changes depending on an applied voltage, and wherein the curvature center of the interface between the conductive liquid and the insulating liquid of the liquid lens system is shifted toward the conductive liquid.

5. The imaging apparatus according to claim 4, wherein the liquid lens system of the imaging lens system includes a light-transmissive substrate, the conductive liquid, the insulating liquid and a light-transmissive substrate disposed in this order from the object side.

**Amended claims under Art. 19.1 PCT**

1. (amended) An imaging lens system **characterized by** including only a first lens group and a second lens group in this order from the object side, and **characterized in that**:

   the second lens group includes a liquid lens system in which the curvature radius of the interface between a conductive liquid and an insulating liquid changes depending on an applied voltage;
   the liquid lens system includes a light-transmissive substrate, the conductive liquid, the insulating liquid and a light-transmissive substrate disposed in this order from the object side;
   the curvature center of the interface between the conductive liquid and the insulating liquid of the liquid lens system is shifted toward the conductive liquid; and

the curvature center of the interface between the light-transmissive substrate and the conductive liquid is shifted toward the light-transmissive substrate.

2.  (amended) The imaging lens system according to claim 1,
    **characterized in that** a stop is disposed on the object side with respect to the position of the interface between the conductive liquid and the insulating liquid of the liquid lens system.

3.  (amended) An imaging apparatus **characterized by** including an imaging lens system, a stop and an imaging unit, and **characterized in that**:

    the imaging lens system includes only a first lens group and a second lens group in this order from the object side;
    the second lens group includes a liquid lens system in which the curvature radius of the interface between a conductive liquid and an insulating liquid changes depending on an applied voltage;
    the liquid lens system of the imaging lens system includes a light-transmissive substrate, the conductive liquid, the insulating liquid and a light-transmissive substrate disposed in this order from the object side; and
    the curvature center of the interface between the conductive liquid and the insulating liquid of the liquid lens system is shifted toward the conductive liquid, and the curvature center of the interface between the light-transmissive substrate and the conductive liquid is shifted toward the light-transmissive substrate.

4.  (canceled)

5.  (canceled)

[FIG.1]

[FIG.2]

[FIG.3A]

a:C-RAY
b:d-RAY
c:F-RAY

SPHERICAL ABERRATION [mm]
ASTIGMATISM [mm]
DISTORTION ABERRATION [%]

[FIG.3B]

a:C-RAY
b:d-RAY
c:F-RAY

SPHERICAL ABERRATION [mm]
ASTIGMATISM [mm]
DISTORTION ABERRATION [%]

[FIG.3C]

a:C-RAY
b:d-RAY
c:F-RAY

SPHERICAL ABERRATION [mm]
ASTIGMATISM [mm]
DISTORTION ABERRATION [%]

14

[FIG.4]

[FIG.5A]

IMAGE HEIGHT (DEGREE)

IMAGE HEIGHT (DEGREE)

a:C-RAY
b:d-RAY
c:F-RAY

-0.10 -0.05 0.0 0.05 0.10
SPHERICAL ABERRATION [mm]

-0.20 -0.10 0.0 0.10 0.20
ASTIGMATISM [mm]

-15.0 -7.5 0.0 7.5 15.0
DISTORTION ABERRATION [%]

[FIG.5B]

IMAGE HEIGHT (DEGREE)

IMAGE HEIGHT (DEGREE)

a:C-RAY
b:d-RAY
c:F-RAY

-0.100 -0.050 0.0 0.050 0.100
SPHERICAL ABERRATION [mm]

-0.200 -0.100 0.0 0.100 0.200
ASTIGMATISM [mm]

-15.0 -7.5 0.0 7.5 15.0
DISTORTION ABERRATION [%]

[FIG.5C]

IMAGE HEIGHT (DEGREE)

IMAGE HEIGHT (DEGREE)

a:C-RAY
b:d-RAY
c:F-RAY

-0.100 -0.050 0.0 0.050 0.100
SPHERICAL ABERRATION [mm]

-0.200 -0.100 0.0 0.100 0.200
ASTIGMATISM [mm]

-15.0 -7.5 0.0 7.5 15.0
DISTORTION ABERRATION [%]

[FIG.6]

[FIG.7A]

IMAGE HEIGHT (DEGREE)

IMAGE HEIGHT (DEGREE)

c

b

a

1.00

0.75

0.50

0.25

a:C-RAY
b:d-RAY
c:F-RAY

-0.100 -0.050 0.00 0.050 0.100
SPHERICAL ABERRATION [mm]

S

T

2.40

1.80

1.20

0.60

-0.200 -0.100 0.0 0.100 0.200
ASTIGMATISM [mm]

2.40

1.80

1.20

0.60

-15.0 -7.5 0.0 7.5 15.0
DISTORTION ABERRATION [%]

[FIG.7B]

IMAGE HEIGHT (DEGREE)

IMAGE HEIGHT (DEGREE)

c

b

a

1.00

0.75

0.50

0.25

a:C-RAY
b:d-RAY
c:F-RAY

-0.100 -0.050 0.0 0.050 0.100
SPHERICAL ABERRATION [mm]

S

T

2.40

1.80

1.20

0.60

-0.200 -0.100 0.0 0.100 0.200
ASTIGMATISM [mm]

2.40

1.80

1.20

0.60

-15.0 -7.5 0.0 7.5 15.0
DISTORTION ABERRATION [%]

[FIG.7C]

IMAGE HEIGHT (DEGREE)

IMAGE HEIGHT (DEGREE)

c

a

1.00

0.75

b

0.50

0.25

a:C-RAY
b:d-RAY
c:F-RAY

-0.100 -0.050 0.0 0.050 0.100
SPHERICAL ABERRATION [mm]

S

T

2.40

1.80

1.20

0.60

-0.200 -0.100 0.0 0.100 0.200
ASTIGMATISM [mm]

2.40

1.80

1.20

0.60

-15.0 -7.5 0.0 7.5 15.0
DISTORTION ABERRATION [%]

## INTERNATIONAL SEARCH REPORT

| | International application No. |
|---|---|
| | PCT/JP2009/050714 |

A. CLASSIFICATION OF SUBJECT MATTER
*G02B13/00*(2006.01)i, *G02B7/28*(2006.01)i, *G02B13/18*(2006.01)i, *G02B26/00*(2006.01)i, *G03B3/00*(2006.01)i, *H04N5/225*(2006.01)i, *H04N5/232*(2006.01)i

According to International Patent Classification (IPC) or to both national classification and IPC

B. FIELDS SEARCHED

Minimum documentation searched (classification system followed by classification symbols)
G02B13/00, G02B7/28, G02B13/18, G02B26/00, G03B3/00, H04N5/225, H04N5/232

Documentation searched other than minimum documentation to the extent that such documents are included in the fields searched
Jitsuyo Shinan Koho          1922-1996    Jitsuyo Shinan Toroku Koho    1996-2009
Kokai Jitsuyo Shinan Koho    1971-2009    Toroku Jitsuyo Shinan Koho    1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2004/038480 A1 (KONINKLIJKE PHYILIPS ELECTRONICS N.V.),<br>06 May, 2004 (06.05.04),<br>Full text; all drawings<br>& JP 2006-504132 A      & US 2006/0028734 A1<br>& EP 1567903 A           & KR 10-2005-0059291 A<br>& CN 1705901 A | 1,2,4,5<br>3 |
| X<br>Y | JP 2007-272232 A (Samsung Electro-Mechanics Co., Ltd.),<br>18 October, 2007 (18.10.07),<br>Full text; all drawings<br>& US 2007/0229970 A1     & KR 10-0714583 B1 | 1,3,4<br>2,5 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>23 March, 2009 (23.03.09) | Date of mailing of the international search report<br>07 April, 2009 (07.04.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/050714

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2006-154517 A  (Seiko Precision Inc.), 15 June, 2006 (15.06.06), Figs. 1, 2, 3 (Family: none) | 1-5 |

Form PCT/ISA/210 (continuation of second sheet) (April 2007)

**EP 2 241 918 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005084387 A

- JP 2006072295 A

**Non-patent literature cited in the description**

- **S. Kuiper et al.** Variable-focus liquid lens for miniature cameras. *Applied Physics Letters,* 16 August 2004, vol. 85 (7), 1128-1130